Europäisches Patentamt

**European Patent Office**

**Office européen des brevets**

(19)

(11) Publication number: **0 143 565**
A1

(12)

# EUROPEAN PATENT APPLICATION

(21) Application number: **84307543.3**

(22) Date of filing: **01.11.84**

(51) Int. Cl.⁴: **G 01 N 21/33**, E 21 B 49/00

(30) Priority: **01.11.83 GB 8329089**

(43) Date of publication of application: **05.06.85**
**Bulletin 85/23**

(84) Designated Contracting States: **AT DE FR IT NL SE**

(71) Applicant: **GENESIS (U.K.) LIMITED, Suite A Winfex**
**Centre Craigshaw Crescent, West Tullos Aberdeen (GB)**

(72) Inventor: **Bather, John M., Rossall, 16 Willowmead Drive,**
**Prestbury Cheshire, Sk10 4BU (GB)**

(74) Representative: **Atkinson, Peter Birch et al, Marks &**
**Clerk Scottish Life House Bridge Street, Manchester**
**M3 3DP (GB)**

(54) **Analysis of material from a drillhole.**

(57) A method of analysing a sample of material from a drill hole drilled with an oil based drilling fluid to detect the presence therein of indigenous hydrocarbon, comprises subjecting the sample or an indigenous hydrocarbon containing extract thereof to ultra-violet radiation to obtain a parameter for absorbance or emittance of the sample at a selected wavelength and comprising this parameter with that obtained at the same wavelength for a sample of the base oil.

1.

## Analysis of Material from a Drillhole

The present invention relates to the analysis of material exiting from a drill hole prepared for the exploration, or exploitation, of hydrocarbons (particularly oil).

In drilling operations, eg when searching for oil or establishing the extent of an oil field, it is standard practice to use a so-called drilling mud to lubricate the drill bit.

During the drilling, the mud is pumped from the surface down to the drill bit and subsequently back to the surface bringing with it cuttings from the geological formations which have been drilled by the bit.

The drilling mud may be either water or oil based. Oil based muds are used where the drilling is in certain types of clay formation which would become hydrated and swollen by water with consequent disadvantageous clogging of pore spaces adjacent to the bore hole. Hitherto diesel oil has been used as the base oil for the oil based muds but is now falling into environmental disfavour and is being replaced by so-called invert oils which are of low aromaticity.

The use of oil based muds causes problems when it is desired to analyse for the presence of indigenous oil in the mud or cuttings from the well as it is difficult to distinguish between the base oil and indigenous oil. For example both the base oil and indigenous oil

2.

fluoresce under ultra violet light and it is not possible to tell from simple observation of fluorescence whether a sample contains only base oil or crude oil or a mixture of both. Such analysis is required, for example, to establish whether the drill bit has reached a known oil bearing horizon. Such analyses are important as it may be required to take a core sample from, and only from, the oil bearing formation. Alternatively, it may be required to analyse core sample from the oil bearing horizon to establish whether the corer is still in the horizon.

There is a requirement for a technique which will allow material brought to the surface to be analysed rapidly for the presence of indigenous hydrocarbon, in order to minimise the time for which the drill bit is non-operational.

It is an object of the present invention to provide a method of analysing a sample of material from a drill hole, drilled with an oil based drilling fluid, to detect the presence therein of indigenous hydrocarbon.

This object is achieved in accordance with the invention by subjecting the sample, or an oil containing extract thereof, to ultra violet radiation, obtaining a parameter for absorbance or emittance of the sample or extract at a selected wavelength and comparing this parameter with that obtained at the same wavelength for a sample of the base oil.

The invention is based on the fact that the parameters obtained at selected wavelengths for indigenous

3.

hydrocarbon are significantly different from those obtained from the base oil, which is of low aromaticity. By a comparison of these parameters it is possible to tell by inspection whether a sample (or extract thereof) of material under test contains indigenous hydrocarbon. It is however more preferred in accordance with the invention to make a more quantitative comparison between parameters obtained at two selected wavelengths from the sample (or extract thereof) and those obtained at the same wavelengths for a reference sample of base oil of known concentration and a reference sample of crude oil (of the type known to be present at the exploration site). In this way, and as more fully described later with reference to the drawings, it is possible to establish the concentration of indigenous oil in the sample under test.

The ultra-violet analysis technique employed in the invention is preferably ultra-violet absorption spectroscopy and the parameter utilised for detecting the presence of indigenous hydrocarbons is the absorbance at one or more selected wavelengths. It is however also envisaged that the invention may be based on the observance of the level of emitted fluorescence detected laterally of the incident u.v. radiation.

The method of the invention may be carried out on samples of the drilling mud, cuttings or core coming to the surface, the former being much preferred. Preferably the analysis is performed on an extract (from which

4.

insoluble material has been removed) of the sample in an
organic solvent which is substantially u.v. transparent
at the

5.

0143565

wavelengths under consideration. A preferred solvent is methylene chloride.

Preferably also the parameters for the base oil are obtained from a sample thereof extracted (eg with methylene chloride) from mud or cuttings returned to the surface. This is because the u.v. absorbance and fluorescence characteristics of the base oil are altered on its passage from the surface to the drill bit and back to the surface. This ensures that the parameters of the base oil in the sample under analysis and in the reference sample thereof are identical so that any differences are due to the presence of indigeneous oil.

The invention is illustrated by way of example only with reference to the accompanying drawings in which:

Fig.1 shows the u.v. absorbance spectra for solutions of base oil and indigenous hydrocarbon of known concentration; and

Fig. 2 shows the u.v. absorbance spectra for an organic solvent extract of a sample of drilling mud returned to the surface.

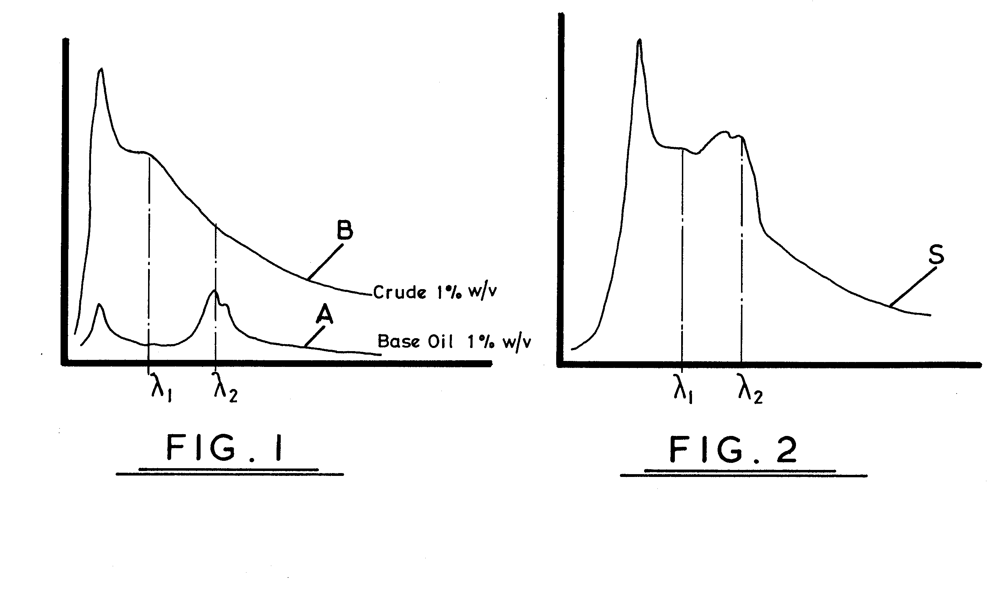

In Fig. 1, spectrum A represents the u.v. absorbance spectrum of a 1% w/v solution of base oil (eg Inverkleen) extracted from a mud sample returned to the surface and which is known not to contain indigenous hydrocarbon. Spectrum B is obtained from a 1% w/v solution of the crude oil of the type known to be present in the area of exploration.

The spectrum S shown in Fig. 2 is that of an

6.

organic solvent extract (X) of a crude oil containing sample of mud of known weight returned to the surface.

The spectra of Figs. 1 and 2 may be scanned over the range 230-350 nm. Within this range two wavelengths $\lambda_1$ and $\lambda_2$ are selected at each of which there are substantially different absorbances between the base oil and crude oil. Generally the difference in absorbance should be at least 10%.

The values of $\lambda_1$ and $\lambda_2$ may, for example, be in the region of 257 and 320 respectively.

Now, let

concentration of base oil in solvent extract X = $c_A^X$

concentration of crude oil in the solvent extract X = $c_B^X$.

Absorbance of base oil solution at $\lambda_1$ (Spectrum A) = $E_{\lambda 1}^A$

Absorbance of crude oil solution at $\lambda_1$ (Spectrum B) = $E_{\lambda 1}^B$

Absorbance of base oil solution at $\lambda_2$ (Spectrum A) = $E_{\lambda 2}^A$

Absorbance of crude oil solution at $\lambda_2$ (Spectrum B) = $E_{\lambda 2}^B$

Absorbance of sample oil solution at $\lambda_1$ (Spectrum S) = $E_{\lambda 1}^S$

Absorbance of sample oil solution at $\lambda_2$ (Spectrum S) = $E_{\lambda 2}^S$

7.

Two simultaneous equations may be set up as follows

$$C_A E^A_{\lambda 1} + C_B E^B_{\lambda 1} = E^S_{\lambda 1} \quad - \quad 1$$

$$C_A E^A_{\lambda 2} + C_B E^B_{\lambda 2} = E^S_{\lambda 2} \quad - \quad 2$$

All of the E values are known so that equations 1 and 2 may be solved to obtain $C^X_A$ and $C^X_B$, i.e. the concentrations of base oil and crude oil respectively in the sample extract from the mud. It is thus possible to establish the concentration of crude oil in the original sample of mud.

It will have been noted that the concentration of the reference solutions of base oil and crude oil for spectra A and B have been set as 1%. This is to ensure that the concentrations $C_A$ and $C_B$ may be obtained directly from equations 1 and 2. It is possible to run spectra on the reference solutions at concentrations other than 1% and scale up the spectra to a nominal 1% concentration. Alternatively allowance may be made in equations 1 and 2 for the fact that the reference solutions are not of 1% concentration.

The analysis method described with reference to the drawings may be completed within 15 minutes, including time required for the preparation of the solution for running spectrum S. It will of course be appreciated that spectra A and B are reference spectra and need not be repeated each time a fresh sample of mud or cutting is to be analysed. It should however be noted that the reference spectrum for the base oil (i.e. spectrum A) should be repeated periodically as the absorption

8.

characteristics of the base oil may change with time.

CLAIMS:-

1. A method of analysing a sample of material from a drill hole drilled with an oil based drilling fluid to detect the presence therein of indigenous hydrocarbon, the method comprising subjecting the sample or an indigenous hydrocarbon containing extract thereof to ultra-violet radiation, obtaining a parameter for absorbance or emittance of the sample at a selected wavelength and comparing this parameter with that obtained at the same wavelength for a sample of the base oil.

2. A method as claimed in claim 1 wherein the parameter obtained is the ultra-violet absorbance.

3. A method as claimed in claim 1 or 2, wherein the parameter obtained for the base oil has been obtained from a sample thereof returned from the drill hole.

4. A method as claimed in any one of claims 1 to 3 wherein the analysis is effected on an extract of the sample of material dissolved in a U.V. transparent organic solvent.

5. A method for the quantitative analysis of the amount of indigenous hydrocarbon in a sample of material from a drill hole drilled with an oil based drilling fluid, the method comprising subjecting the sample, or an indigenous hydrocarbon containing extract thereof, to ultra voilet radiation at first and second wavelengths to obtain parameters for absorption or emission of the sample, or extract, at said wavelengths, obtaining values of the corresponding parameters at said wavelengths for both the base oil and the indigenous oil known to be in the sample, and evaluating from the parameters and the first and second wavelengths .the amount of indigenous hydrocarbon in the sample.

6. A method as claimed in claim 5, wherein the parameters for the base oil are obtained from a sample thereof which has been returned from the drill hole.

7. A method as claimed in claim 5 or 6, wherein said parameters are absorption parameters.

8. A method as claimed in claim 7, wherein, at each of said first and second wavelengths, the difference in absorption between said base oil and said indigenous hydrocarbon is at least 10%.

9. A method as claimed in claim 7 or 8, wherein the first wavelength is in the region of 257 nm and the second wavelength is in the region of 320 nm.

10. A method as claimed in any one of claims 5 to 9, wherein the analysis is effected on an extract of the sample of material in a U.V. transparent organic solvent.

FIG. 1

Crude 1% w/v — B

Base Oil 1% w/v — A

$\lambda_1$    $\lambda_2$

FIG. 2

S

$\lambda_1$    $\lambda_2$

0143565

0143565

European Patent Office

**EUROPEAN SEARCH REPORT**

. Application number

EP 84 30 7543

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 423 774 (J. HEIGL) <br><br> * Columns 1-3 * <br><br> --- | 1,4 | G 01 N 21/33 <br> E 21 B 49/00 |
| A | US-A-2 297 939 (J. CAMPBELL) <br><br> * Column 3 * <br><br> --- | 1 | |
| A | US-A-4 174 629 (J. STRIEGLER) <br><br> * Columns 1-2 * <br><br> ----- | 1 | |

| TECHNICAL FIELDS SEARCHED (Int. Cl.4) |
|---|
| G 01 N 21/33 <br> E 21 B 49/00 |

The present search report has been drawn up for all claims

| Place of search | Date of completion of the search | Examiner |
|---|---|---|
| THE HAGUE | 06-02-1985 | BOEHM Ch.E.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82